# EUROPÄISCHE PATENTSCHRIFT

(11) **EP 3 256 338 B1**
(45) Veröffentlichungstag und Bekanntmachung des Hinweises auf die Patenterteilung: **09.06.2021**
(21) Anmeldenummer: 16704823.0
(22) Anmeldetag: 10.02.2016
(51) Int. Cl.: B60J 3/04, E06B 9/24, G02F 1/163, H02M 7/48

(54) **VERFAHREN ZUR ANSTEUERUNG EINES ELEKTROOPTISCHEN GEGENSTANDES, INSBESONDERE EINER ELEKTROCHROMATISCH GETÖNTEN GLASSCHEIBE IN EINEM KRAFTFAHRZEUG**
METHOD FOR CONTROLLING AN ELECTRO-OPTICAL OBJECT, IN PARTICULAR AN ELECTROCHROMICALLY TINTED GLASS PANE IN A MOTOR VEHICLE
PROCÉDÉ DE COMMANDE D'UN OBJET ÉLECTRO-OPTIQUE, EN PARTICULIER D'UNE VITRE TEINTÉE ÉLECTROCHROME DANS UN VÉHICULE À MOTEUR

(30) Priorität: 11.02.2015 DE 102015101956
(43) Veröffentlichungstag der Anmeldung: 20.12.2017
(73) Patentinhaber: Küster Holding GmbH, 35630 Ehringshausen (DE)
(72) Erfinder: MEDEBACH, Steffen, 57277 Burbach-Gilsbach (DE); LOTZ, Andreas, 35614 Asslar-Berghausen (DE); SCHEPP, Gunter, 35428 Langgöns-Oberkleen (DE); OBERPICHLER, Frank, 35396 Giessen-Wieseck (DE); KAMMER, Thomas, 35444 Biebertal (DE)
(74) Vertreter: Müller, Eckhard
(86) Internationale Anmeldenummer: PCT/EP2016/052804
(87) Internationale Veröffentlichungsnummer: WO 2016/128452

(56) Entgegenhaltungen:
- DE-A1- 10 062 363
- DE-A1-102008 060 040
- DE-A1-102010 056 203
- DE-T2- 69 505 805
- JP-A- H06 113 555
- US-A1- 2003 206 418
- US-A1- 2007 291 523

## Beschreibung

Die Erfindung betrifft ein Verfahren zur Ansteuerung eines elektrooptischen Gegenstandes, insbesondere einer elektrochromatisch getönten Glasscheibe in einem Kraftfahrzeug, wobei der Transmissionsgrad des elektrooptischen Gegenstandes durch Anlegen einer elektrischen Wechselspannung verändert wird.

Zudem betrifft die Erfindung ein System mit einem elektrooptischen Gegenstand und einer Schaltungsanordnung für ein Steuergerät, welche aufweist einen Mikrocontroller und einen Stromkreis, wobei über den Stromkreis der elektrooptische Gegenstand, bei dem der Transmissionsgrad durch Anlegen einer elektrischen Wechselspannung veränderbar ist, ansteuerbar ist.

Elektrische Ansteuerungen von elektrooptischen Gegenständen offenbaren die US 2003/0206418 A1, DE 695 05 805 T2, US 2007/0291523 A1 sowie die DE 100 62 363 A1.

Aus der DE 10 2008 060 040 A1 ist eine Vorrichtung zum Betrieb von transparenten Flächenelementen bekannt, welche Kleintransformatoren und einen Vierquadrantensteller zur Ansteuerung der Primärspule des entsprechenden Kleinspannungstransformators umfasst.

Verfahren der eingangs genannten Art sind beispielsweise aus der DE 10 2010 056 203 A1 und aus der DE 10 2008 060 040 A1 bekannt und werden insbesondere auch für die Ansteuerung einer verstellbaren elektrochromatisch getönten Glasscheibe in einem Kraftfahrzeug eingesetzt.

Hierbei wird aus einer Quellenspannung eine Niederwechselspannung oder eine Niedergleichspannung erzeugt, wobei zumindest ein Wandler vorgesehen ist, mit dem die Niederwechselspannung oder Niedergleichspannung in eine Betriebswechselspannung zum Betrieb der Glasscheibe umwandelbar ist. Zur Erzeugung einer Niedergleichspannung ist beispielsweise als Energiequelle im Stand der Technik eine Batterie, insbesondere eine Fahrzeugbatterie, vorgesehen.

Zur Veränderung des Transmissionsgrades an einer Glasscheibe in einem Kraftfahrzeug mit Hilfe einer "SPD (engl.: suspended-particle-device)"-Folie ist es allerdings notwendig, an den Anschlüssen dieser Folie ein elektrisches Wechselfeld mit einer Betriebsspannung (Wechselspannung) von ca. 160 Volt und einer Frequenz von ca. 50 Hz anzulegen. Die Spannungshöhe definiert dabei die Lichtdurchlässigkeit der Scheibe.

Um die Niederwechselspannung in die benötigte Betriebsspannung, d. h Ansteuerspannung, umzuwandeln, ist man im Stand der Technik dazu übergegangen, sogenannte DC/AC Boost Converter einzusetzen; hierbei handelt es sich um einen Wechselrichter, der aus einer Gleichspannung eine Wechselspannung erzeugt.

Nachteilig ist bei dem aus dem Stand der Technik bekannten Verfahren vor allem, dass die Verwendung eines DC/AC Boost Converters dazu führen kann, dass das Hochspannungspotential mit dem 12V-Bordnetz des Kraftfahrzeugs galvanisch gekoppelt ist, was wiederum zu einem Verletzungsrisiko für den Benutzer des Kraftfahrzeugs bei Fehlfunktionen der Verkabelung und der Ansteuerelektronik führen kann.

Davon ausgehend ist es Aufgabe der vorliegenden Erfindung, ein Verfahren der eingangs genannten Art derart weiterzuentwickeln, dass eine galvanische Trennung von Ansteuerspannung und Bordspannung gewährleistet ist.

Diese Aufgabe wird mit den Merkmalen des Anspruchs 1 gelöst. Vorteilhafte Weiterbildungen der Erfindung ergeben sich aus den Unteransprüchen.

Die Erfindung sieht vor, dass die Ansteuerung des elektrooptischen Gegenstandes durch einen Kleinspannungstransformator erfolgt.

Durch die Verwendung eines Kleinspannungstransformators zur Ansteuerung des elektrooptischen Gegenstands kann auf einen DC/AC Boost Converter verzichtet werden. Ein Verletzungsrisiko für den Benutzer besteht nicht, da die Ansteuerspannung von der Bordspannung elektrisch sicher getrennt ist. Die Spannungsumsetzung erfolgt vorzugsweise dergestalt, dass in einem Schaltkreis zur Ansteuerung der Folie bzw. Glasscheibe zunächst die Primärspule (5 V) eines 3-Wicklungsnetztransformators angesteuert wird. Dies kann vorzugsweise über ein sinusbewertetes Pulsweitenmodulation-Schaltmuster (12 Vss, 18 kHz) erfolgen. Sekundärseitig wird dann aus einer 220 V Wicklung des Transformators das Spannungssignal zur Ansteuerung der Folie bzw. Glasscheibe bereitgestellt.

Hierzu wird gemäß der Erfindung auch ein System gemäß Anspruch 3 zugrunde gelegt, bei dem in einem Schaltkreis ein Kleinspannungstransformator integriert ist, über den der elektrooptische Gegenstand ansteuerbar ist, wobei der Kleinspannungstransformator von einem digitalen Signal angesteuert wird, das von einem Mikrocontroller erzeugt wird. Hierdurch wird vorteilhafterweise erreicht, dass der Transmissionsgrad jeder Scheibe bzw. jedes Flächenelements individuell eingestellt werden kann. Gemäß der Erfindung wird also anstatt eines Wandlers oder DC/AC Boot Converters ein Mikrocontroller eingesetzt.

Die Verwendung eines Kleinspannungstransformators hat zudem zusätzlich den Vorteil, dass diese kostengünstig ist, was insbesondere in der Automobilindustrie von nicht geringer Bedeutung ist.

Im Rahmen der Erfindung findet ein Mikrocontroller Verwendung, der ein pulsweitenmoduliertes Spannungssignal erzeugt und damit direkt die Primärspule eines 3-Wicklungsnetztransformators ansteuert. Sekundärseitig wird aus einer 220 Volt-Wicklung das Signal zur direkten Ansteuerung der Glasscheibe bereitgestellt. Eine ebenfalls galvanisch getrennte Wicklung dient dabei der Rückkopplung der Überwachung des Nutzsignals des Steuergeräts. Der Mikrocontroller weist wesentliche Bestandteile eines herkömmlichen Mikrocontrollers, wie einen Prozessor, Speicherelemente sowie eine Schaltung zur Spannungsüberwachung auf. Weiterhin kann der Mikrocontroller mit Peripheriefunktionen wie LIN (local interconnect network) usw. versehen und mit einem Bussystem eines Kraftfahrzeugs vernetzt sein.

Die Erfindung sieht vor, dass der Kleinspannungstransformator von einem digitalen Spannungssignal angesteuert wird, das von dem Mikrocontroller erzeugt wird und erfindungsgemäß ein pulsweitenmoduliertes Spannungssignal ist, wobei es von einem Vierquadrantensteller in Form einer MOSFET-Brückenschaltung in ein analoges Signal umgewandelt wird. Durch die Verwendung eines pulsweitenmoduliertes Spannungssignals kann das digitale Signal des Mikrocontrollers den Kleinspannungstransformator als analoges Gerät ansteuern.

Vorzugsweise wird der Kleinspannungstransformator dabei über ein sinusbewertetes pulsweitenmoduliertes Schaltmuster angesteuert. Der mit analogen Signalen arbeitende Schaltkreis für die Ansteuerung der Folie bzw. der Glasscheibe, in den der Kleinspannungstransformator integriert ist, ist dabei mit dem Mikrocontroller über einen Analoganschluss verbunden.

Vorteilhafterweise weist der digital arbeitende Mikrocontroller hierzu als weitere elektronische Funktionseinheit einen Analog-Digital Wandler auf, der das analoge Signal in ein digitales Signal in dem Mikrocontroller umwandelt

Die Erfindung sieht vor, dass dem Mikrocontroller der Vierquadrantensteller in Form einer Mosfet-Brückenschaltung zugeordnet ist. Im Falle einer von der Quellenspannung erzeugten Niedergleichspannung, wird die Niedergleichspannung mittels der Mosfet-Brückenschaltung in eine Wechselspannung umgewandelt. Hierbei können jedoch durch Schaltflanken der Brückenschaltung hochfrequente Störungen entstehen. Eine weitere vorteilhafte Ausgestaltung der Erfindung sieht daher vor, dass hochfrequente Störungen durch den Eisenkern des Kleinspannungstransformators gefiltert werden. Hierbei werden die Störungen vorteilhafterweise zu einem 50 Hz Sinussignal umgewandelt.

Die Schaltungsanordnung des Systems gemäß Anspruch 3 weist einen Mikrocontroller und einen Stromkreis auf, über den ein elektrooptischer Gegenstand, bei dem der Transmissionsgrad durch Anlegen einer elektrischen Wechselspannung veränderbar ist, ansteuerbar ist, wobei in den Stromkreis ein Kleinspannungstransformator integriert ist, der mittels des Vierquadrantenstellers in Form einer MOSFET-Brückenschaltung mit dem Mikrocontroller verbunden ist. In erfindungswesentlicher Weise übernimmt der Kleinspannungstransformator dabei die Funktion der Ansteuerung des elektrooptischen Gegenstands. Erfindungsgemäß ist vorgesehen, dass die MOSFET-Brückenschaltung mit dem Mikrocontroller und dem Transformator verbunden ist.

Um die Schaltungsanordnung mit weiteren Instrumentarien der Sicherheit zu versehen, ist es zweckmäßig, der Brückenschaltung vorzugsweise ein Temperatur- und Stromwächter sowie erfindungsgemäß dem Kleinspannungstransformator einen Spannungswächter zuzuordnen.

Eine sehr vorteilhafte Variante der Erfindung sieht vor, dass zwischen dem Stromkreis zur Ansteuerung der Folie bzw. des Glasfensters und einem Analoganschluss des Mikrocontrollers eine Funktionseinheit für die Überwachung des Stroms und der Spannung angeordnet ist. Durch die Verwendung dieser Funktionseinheit ist gewährleistet, dass Fehlerzustände wie Kurzschluss, Kurzschluss zum Bordnetz oder Fehlerstromerkennung durch auftretende Isolationsfehler überwacht und bei Eintritt derselben abgeschaltet werden können. Kraftfahrzeuge arbeiten heutzutage mit modernen Bussystemen. Eine weitere vorteilhafte Ausbildung der Erfindung sieht daher vor, dass die Schaltungsanordnung in einem Bussystem eines Kraftfahrzeugs einbindbar ist.

Weitere Ziele, Vorteile, Merkmale und Anwendungsmöglichkeiten der vorliegenden Erfindung ergeben sich aus der nachfolgenden Beschreibung von Ausführungsbeispielen anhand der Figur. Dabei bilden alle beschriebenen und/oder bildlich dargestellten Merkmale für sich oder in beliebiger sinnvoller Kombination den Gegenstand der vorliegenden Erfindung, auch unabhängig von ihrer Zusammenfassung in den Ansprüchen oder deren Rückbeziehung.

Es zeigt die einzige Figur ein Blockschaltbild des erfindungsgemäßen Verfahrens und des erfindungsgemäßen mit der Schaltungsanordnung.

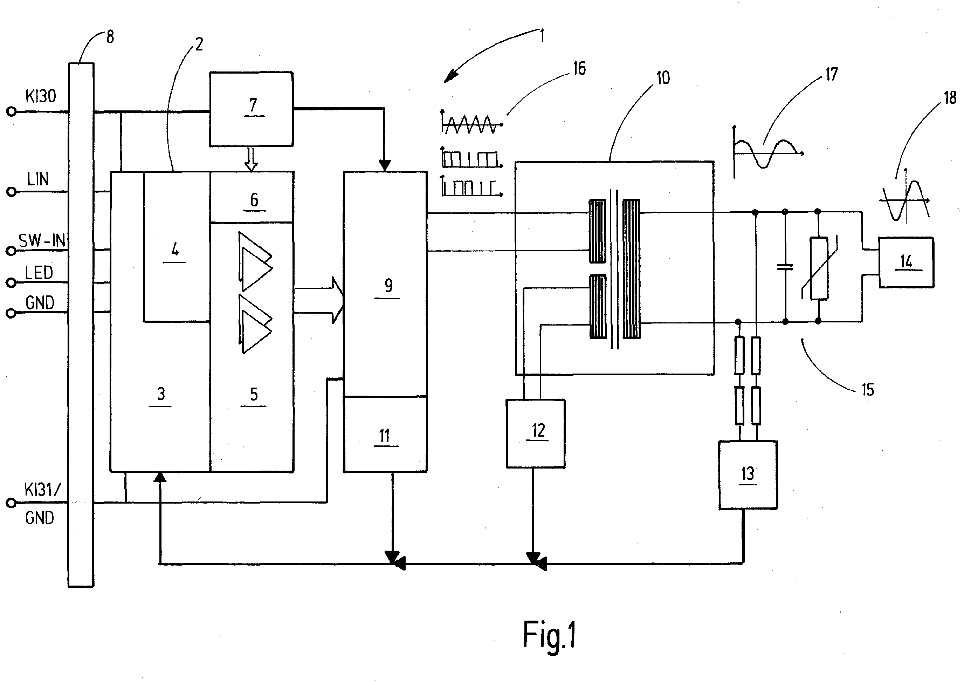

Figur 1 zeigt die Schaltungsanordnung 1 zur Durchführung des erfindungsgemäßen Verfahrens, bei dem ein elektrooptischer Gegenstand, wie beispielsweise eine elektrochromatisch getönten Glasscheibe, mit einem Anschluss 14 mittels eines Spannungssignals 17 angesteuert wird. Der Anschluss 14 ist so ausgelegt, dass der elektrooptische Gegenstand mit negativen Spannungssignalen bis 160 V und mit einer Frequenz im Bereich von 50 Hz angesteuert werden kann. Die Verwendung dieser Frequenz für das elektrische Feld gewährleistet, dass keine Antennenstörungen aufgrund von in den elektrooptischen Gegenstand integrierten Antennen auftreten.

Die in Figur 1 dargestellte Schaltungsanordnung 1 umfasst als wesentliche Bestandteile den Mikrocontroller 2 sowie den Kleinspannungstransformator 10. Der Mikrocontroller weist wiederum wesentliche Bestandteile wie den Prozessor 6, Speicherelemente 4 sowie eine Schaltung 3 zur Spannungsüberwachung auf. Weiterhin ist der Mikrocontroller 2 mit herkömmlichen Peripheriefunktionen, wie LIN (local interconnect network) und herkömmlichen Anschlüssen wie KI30 (Batterieanschluss) und GND (Ground-Anschluss) versehen, die über einen EMC/ESD Filter 8 an den Mikrocontroller 2 angeschlossen sind.

Dem Mikrocontroller 2 ist zudem eine weitere Funktionseinheit in Form einer Schaltung 7 für den Gegenspannungsschutz zugeordnet, die mit der Mosfet-Brückenschaltung verbunden ist, die mit dem Bezugszeichen 9 versehen ist. Der Schaltung 9 ist wiederum ein Spannungs- und Temperaturwächter 11 zugeordnet.

Bei der in Figur 1 dargestellten Ausführungsform der Schaltungsanordnung 1 ist ferner ein Spannungswächter 12 vorgesehen, der dem

Kleinspannungstransformator 10 zugeordnet ist. Der Spannungswächter 12 dient der Überwachung von Spannungsfehlern in dem Kleinspannungstransformator 10.

Bei der in Figur 1 gezeigten Spannungsanordnung zur Ansteuerung eines optoelektronischen Gegenstandes erzeugt der Mikrocontroller 2 ein digitales Spannungssignal, das im Falle eines Niedriggleichspannungssignals zunächst durch die Mosfet-Brückenschaltung 9 in ein Niedrigwechselspannungssignal umgewandelt wird und als ein von dem Mikrocontroller 2 erzeugtes pulsweitenmodulierten Schaltmusters 16 die Sekundärspule des als 3-Wicklungsnetztransformators ausgebildeten Kleinspannungstransformators 10 ansteuert. Die Pulsweitenmodulation dient der Umwandlung des digitalen Signals des Mikrocontrollers 2 in ein analoges Signal für den Kleinspannungstransformator 2, der als analoges Gerät ausgebildet ist.

In erfindungswesentlicher Weise ist der Schaltungsanordnung 1 ein Stromkreis 15 zugeordnet, in den der Kleinspannungstransformator 10 integriert ist, der wiederum für die Ansteuerung des über den Anschluss 14 angeschlossenen elektrooptischen Gegenstandes vorgesehen ist. Hierzu wird durch den Kleinspannungstransformator 10 sekundärseitig aus einer 220 Volt-Wicklung des Kleinspannungstransformators 10, der in Gestalt eines 3-Wicklungsnetztransformator vorliegt, das Wechselspannungssignal 17 zur direkten Ansteuerung des elektrooptischen Gegenstandes bereitgestellt, das wiederum als Wechselspannungssignal 18 dem Anschluss 14 zugeführt wird.

Die Schaltung 13 für die Überwachung des Stroms und der Spannung in dem mit analogen Signalen arbeitenden Stromkreis 15 dient der Vermeidung von Fehlerzuständen wie Kurzschluss zum Bordnetz und ist zwischen dem Stromkreis 15 und dem Mikrocontroller 2 in einer Leitung angeordnet, die zum Analoganschluss des Mikrocontrollers 2 führt. Das hier analog ankommende Signal wird mittels des Analog-Digital Wandlers 5 in dem digital arbeitenden Mikrocontroller in ein digitales Signal umgewandelt.

### Bezugszeichenliste

- 1: Schaltungsanordnung
- 2: Mikrocontroller
- 3: Schaltung
- 4: Speicherelemente
- 5: Analog-Digital Wandler
- 6: Prozessor
- 7: Schaltung
- 8: EMC/ESD Filter
- 9: Mosfet-Brückenschaltung
- 10: Kleinspannungstransformator
- 11: Spannungs- und Temperaturwächter
- 12: Spannungswächter
- 13: Schaltung
- 14: Anschluss
- 15: Stromkreis
- 16: pulsweitenmoduliertes Schaltmuster
- 17: Spannungssignal
- 18: Wechselspannungssignal

## Patentansprüche

1. Verfahren zur Ansteuerung eines elektrooptischen Gegenstandes, wobei der Transmissionsgrad des elektrooptischen Gegenstandes durch Anlegen einer Wechselspannung verändert wird, wobei die Ansteuerung des elektrooptischen Gegenstandes mit der Wechselspannung durch einen Kleinspannungstransformator (10) in einem Stromkreis (15) erfolgt, wobei der Kleinspannungstransformator (10) von einem digitalen Spannungssignal angesteuert wird, das von einem Mikrocontroller (2) erzeugt wird,
**dadurch gekennzeichnet, dass**
das digitale Spannungssignal ein pulsweitenmoduliertes Spannungssignal ist, und wobei das digitale Spannungssignal ein Niedriggleichspannungssignals ist und zunächst mit Hilfe einer Mosfet-Brückenschaltung (9) in ein Niedrigwechselspannungssignal umgewandelt wird, und wobei das Niedrigwechselspannungssignal direkt die Primärspule des Kleinspannungstransformators (10) ansteuert, wobei der Kleinspannungstransformator (10) als 3-Wicklungsnetztransformator ausgebildet ist, und wobei an dessen Tertiärwicklung Spannungsfehler in dem Kleinspannungstransformator (10) überwacht werden.

2. Verfahren nach Anspruch 1, **dadurch gekennzeichnet, dass** sekundärseitig aus einer 220 Volt-Wicklung des Kleinspannungstransformators (10) ein Wechselspannungssignal (17) zur direkten Ansteuerung des elektrooptischen Gegenstandes bereitgestellt wird.

3. System, umfassend einen elektrooptischen Gegenstand und eine Schaltanordnung für ein Steuergerät, welche umfasst einen Mikrocontroller (2) und einen Stromkreis (15), wobei über den Stromkreis der elektrooptische Gegenstand, bei dem der Transmissionsgrad durch Anlegen einer elektrischen Wechselspannung veränderbar ist, ansteuerbar ist, wobei in dem Stromkreis (15) eine Mosfet-Brückenschaltung (9) und ein Kleinspannungstransformator (10) zum Ansteuern des elektrooptischen Gegenstandes integriert sind, über die der elektrooptische Gegenstand ansteuerbar ist, wobei der Mikrocontroller (2) mit der Mosfet-Brückenschaltung (9) verbunden ist, wobei die Mosfet-Brückenschaltung (9) mit dem Kleinspannungstransformator (10) verbunden ist,
wobei der Mikrocontroller konfiguriert ist, ein digitales Spannungssignal zum Ansteuern des Kleinspannungstransformators (10) zu erzeugen,
**dadurch gekennzeichnet, dass**
das digitale Spannungssignal ein pulsweitenmoduliertes Spannungssignal ist, wobei das digitale Spannungssignal ein Niedriggleichspannungssignal ist und zunächst mit Hilfe der Mosfet-Brückenschaltung (9) in ein Niedrigwechselspannungssignal umgewandelt wird, wobei das Niedrigwechselspannungssignal direkt die Primärspule des Kleinspannungstransformators (10) ansteuert, und wobei der Kleinspannungstransformator (10) als 3 - Wicklungsnetztransformator ausgebildet ist, mit dessen Tertiärwicklung ein Spannungswächter (12) verbunden ist, der Spannungsfehler in dem Kleinspannungstransformator (10) überwacht.

4. System nach Anspruch 3, **dadurch gekennzeichnet, dass** es in einem Bussystem eines Kraftfahrzeugs eingebunden ist, indem der Mikrocontroller (29) mit einer Local-Interconnect-Network-Funktion, LIN, versehen ist und damit mit dem Bussystem des Kraftfahrzeuges vernetzt ist.

## Claims

1. Method for controlling an electro-optical object, wherein the transmittance of the electro-optical object is altered by applying an AC voltage, wherein the control of the electro-optical object with the AC voltage is effected by means of a low-voltage transformer (10) in an electrical circuit (15), wherein the low-voltage transformer (10) is controlled by a digital voltage signal generated by a microcontroller (2),
**characterized in that**
the digital voltage signal is a pulse-width-modulated voltage signal, and wherein the digital voltage signal is a low DC voltage signal and is firstly converted into a low AC voltage signal with the aid of a MOSFET bridge circuit (9), and wherein the low AC voltage signal directly controls the primary coil of the low-voltage transformer (10), wherein the low-voltage transformer (10) is embodied as a three-winding power supply system transformer, and wherein at the tertiary winding thereof voltage faults in the low-voltage transformer (10) are monitored.

2. Method according to Claim 1, **characterized in that** an AC voltage signal (17) for directly controlling the electro-optical object is provided on the secondary side from a 220-volt winding of the low-voltage transformer (10).

3. System, comprising an electro-optical object and a circuit arrangement for a control device, said circuit arrangement comprising a microcontroller (2) and an electrical circuit (15), wherein the electro-optical object, the transmittance of which is able to be altered by applying an electrical AC volage, is controllable by way of the electrical circuit, wherein there are integrated in the electrical circuit (15) a MOSFET bridge circuit (9) and a low-voltage transformer (10) for controlling the electro-optical object, by way of which the electro-optical object is controllable, wherein the microcontroller (2) is connected to the MOSFET bridge circuit (9), wherein the MOSFET bridge circuit (9) is connected to the low-voltage transformer (10),
wherein the microcontroller is configured to generate a digital voltage signal for controlling the low-voltage transformer (10),
**characterized in that**
the digital voltage signal is a pulse-width-modulated voltage signal, wherein the digital voltage signal is a low DC voltage signal and is firstly converted into a low AC voltage signal with the aid of a MOSFET bridge circuit (9), wherein the low AC voltage signal directly controls the primary coil of the low-voltage transformer (10), and wherein the low-voltage transformer (10) is embodied as a three-winding power supply system transformer, to the tertiary winding of which a voltage monitor (12) is connected, which monitors voltage faults in the low-voltage transformer (10).

4. System according to Claim 3, **characterized in that** it is linked in a bus system of a motor vehicle by virtue of the fact that the microcontroller (29) is provided with a local interconnect network function, LIN, and is thereby networked with the bus system of the motor vehicle.

## Revendications

1. Procédé de commande d'un objet électro-optique, le facteur de transmission de l'objet électro-optique étant modifié par application d'une tension alternative, la commande de l'objet électro-optique avec la tension alternative étant effectuée par le biais d'un transformateur à très basse tension (10) dans un circuit (15), le transformateur à très basse tension (10) étant commandé par un signal de tension numérique qui est généré par un microcontrôleur (2), **caractérisé en ce que**
le signal de tension numérique est un signal de tension modulé en largeur d'impulsion, et le signal de tension numérique étant un signal de basse tension continue et étant tout d'abord converti en un signal de basse tension alternative à l'aide d'un circuit de pont MOSFET (9), et le signal de basse tension alternative commandant directement la bobine primaire du transformateur à très basse tension (10), le transformateur à très basse tension (10) étant conçu comme un transformateur de réseau à 3 enroulements, et des défaillances de tension dans le transformateur à très basse tension (10) étant surveillées sur son enroulement tertiaire.

2. Procédé selon la revendication 1, **caractérisé en ce qu'**un signal de tension alternative (17) est produit côté secondaire à partir d'un enroulement de 220 volts du transformateur à très basse tension (10) pour commander directement l'objet électro-optique.

3. Système comprenant un objet électro-optique et un ensemble de commutation qui est destiné à un organe de commande et qui comprend un microcontrôleur (2) et un circuit (15), l'objet électro-optique, dans lequel le facteur de transmission peut être modifié par application d'une tension électrique alternative, pouvant être commandé par le biais du circuit, un circuit en pont MOSFET (9) permettant de commander l'objet électro-optique et un transformateur à très basse tension (10) destiné à commander l'objet électro-optique étant intégrés dans le circuit (15), le microcontrôleur (2) étant relié au circuit en pont MOSFET (9), le circuit en pont MOSFET (9) étant relié au transformateur à très basse tension (10), le microcontrôleur étant conçu pour générer un signal de tension numérique destiné à commander le transformateur à très basse tension (10),
**caractérisé en ce que**
le signal de tension numérique est un signal de tension modulé en largeur d'impulsion, le signal de tension numérique étant un signal de basse tension continue et étant tout d'abord converti en un signal de basse tension alternative à l'aide du circuit de pont MOSFET (9), le signal de basse tension alternative commandant directement la bobine primaire du transformateur à très basse tension (10), et le transformateur à très basse tension (10) étant conçu comme un transformateur de réseau à 3 enroulements à l'enroulement tertiaire duquel un contrôleur de tension (12) est relié qui surveille des défaillances de tension dans le transformateur à très basse tension (10).

4. Système selon la revendication 3, **caractérisé en ce qu'**il est intégré dans un système de bus d'un véhicule automobile du fait que le microcontrôleur (29) est pourvu d'une fonction de réseau local d'interconnexion, LIN, et est ainsi mis en réseau avec le système de bus du véhicule automobile.
